(19) Europäisches Patentamt / European Patent Office / Office européen des brevets

(11) **EP 3 161 985 B1**

(12) **FASCICULE DE BREVET EUROPEEN**

(45) Date de publication et mention
de la délivrance du brevet:
**18.04.2018 Bulletin 2018/16**

(21) Numéro de dépôt: **15756953.4**

(22) Date de dépôt: **25.06.2015**

(51) Int Cl.:
*H04L 1/00* (2006.01)    *H04B 7/02* (2018.01)
*H04B 7/155* (2006.01)    *H04L 25/03* (2006.01)
*H04L 5/14* (2006.01)

(86) Numéro de dépôt international:
**PCT/FR2015/051728**

(87) Numéro de publication internationale:
**WO 2015/197990 (30.12.2015 Gazette 2015/52)**

(54) **PROCÉDÉ DE TRANSMISSION DYNAMIQUE ET SÉLECTIF FD-DSDF D'UN SIGNAL NUMÉRIQUE POUR UN SYSTÈME MARC AVEC UN RELAIS FULL-DUPLEX, PRODUIT PROGRAMME ET DISPOSITIF RELAIS CORRESPONDANTS**

VERFAHREN ZUR DYNAMISCHEN UND SELEKTIVEN FD-DSDF-ÜBERTRAGUNG EINES DIGITALEN SIGNALS FÜR EIN MARC-SYSTEM MIT EINEM VOLLDUPLEXFÄHIGEN RELAIS UND ENTSPRECHENDES PROGRAMMPRODUKT SOWIE RELAISVORRICHTUNG

METHOD FOR DYNAMIC AND SELECTIVE FD-DSDF TRANSMISSION OF A DIGITAL SIGNAL FOR A MARC SYSTEM WITH A FULL-DUPLEX RELAY, AND CORRESPONDING PROGRAM PRODUCT AND RELAY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2014 FR 1456104**

(43) Date de publication de la demande:
**03.05.2017 Bulletin 2017/18**

(73) Titulaire: **Orange**
**75015 Paris (FR)**

(72) Inventeurs:
• **MOHAMAD, Abdulaziz**
**F-92260 Fontenay aux Roses (FR)**
• **VISOZ, Raphaël**
**F-92170 Vanves (FR)**
• **BERTHET, Antoine**
**F-92290 Chatenay Malabry (FR)**

(56) Documents cités:
**WO-A1-2013/093359**

• **ATOOSA HATEFI ET AL: "Full Diversity Distributed Coding for the Multiple Access Half-Duplex Relay Channel", NETWORK CODING (NETCOD), 2011 INTERNATIONAL SYMPOSIUM ON, IEEE, 25 juillet 2011 (2011-07-25), pages 1-6, XP031928315, DOI: 10.1109/ISNETCOD.2011.5979061 ISBN: 978-1-61284-138-0**
• **Adrian Agustin ET AL: "ICT-215282 STP ROCKET", , 9 janvier 2009 (2009-01-09), pages 1-193, XP055012252, Extrait de l'Internet: URL:http://www.ict-rocket.eu/documents/Del iverables/ROCKET_3D1UPCi.pdf [extrait le 2011-11-16]**
• **PLAINCHAULT M ET AL: "Interference Relay Channel with Precoded Dynamic Decode and Forward Protocols", GLOBAL TELECOMMUNICATIONS CONFERENCE (GLOBECOM 2011), 2011 IEEE, IEEE, 5 décembre 2011 (2011-12-05), pages 1-6, XP032119101, DOI: 10.1109/GLOCOM.2011.6133902 ISBN: 978-1-4244-9266-4**

EP 3 161 985 B1

- **JUN HU ET AL: "Low Density Parity Check Codes over Wireless Relay Channels", IEEE TRANSACTIONS ON WIRELESS COMMUNICATIONS, IEEE SERVICE CENTER, PISCATAWAY, NJ, US, vol. 6, no. 9, 1 septembre 2007 (2007-09-01), pages 3384-3394, XP011195936, ISSN: 1536-1276, DOI: 10.1109/TWC.2007.06083**

**Description**

**Domaine de l'invention**

De manière générale, la présente invention concerne le domaine des communications numériques. Plus précisément, le domaine de l'invention est celui de la transmission de données codées dans un réseau MARC (Multiple-Access Relay Channel). Un réseau MARC est un système de télécommunication qui, pour une destination donnée, comprend au moins trois noeuds : au moins deux émetteurs et un relais. Plus précisément, l'invention se rapporte au relayage et elle concerne l'amélioration de la qualité de la transmission des données, et en particulier l'amélioration des performances du décodage correcteur d'erreurs dans un récepteur (destination). Le relayage est mis en oeuvre par un relais qui coopère avec les sources pour obtenir une communication plus fiable entre les sources et la destination.

L'invention s'applique notamment, mais non exclusivement, à la transmission de données via des réseaux mobiles, par exemple pour des applications temps réel. Elle s'applique plus particulièrement aux relais dits « *Full Duplex* » (FD) avec des liens entre les noeuds qui sont aussi bien non orthogonaux (avec interférences) que semi-orthogonaux (avec certaines interférences) ou orthogonaux (sans interférence). Dans la demande le lien est le canal de communication entre deux ou plusieurs noeuds, il peut être physique ou logique. Lorsque le lien est physique alors il est généralement appelé canal.

**Art antérieur**

Les réseaux, en particulier mobiles, sont à la recherche de gains significatifs en termes de capacité, de fiabilité, de consommation et autres. Le canal de transmission d'un réseau mobile est réputé difficile et conduit à une fiabilité de transmission relativement médiocre. Des progrès importants ont été réalisés ces dernières années, en matière de codage et de modulation, notamment pour des considérations de consommation et de capacité. En effet, dans un réseau mobile où plusieurs émetteurs/récepteurs partagent les mêmes ressources (temps, fréquence et espace) il faut réduire au maximum la puissance d'émission.

Cette réduction va à l'encontre de la couverture et donc de la capacité du système et plus généralement de ses performances.

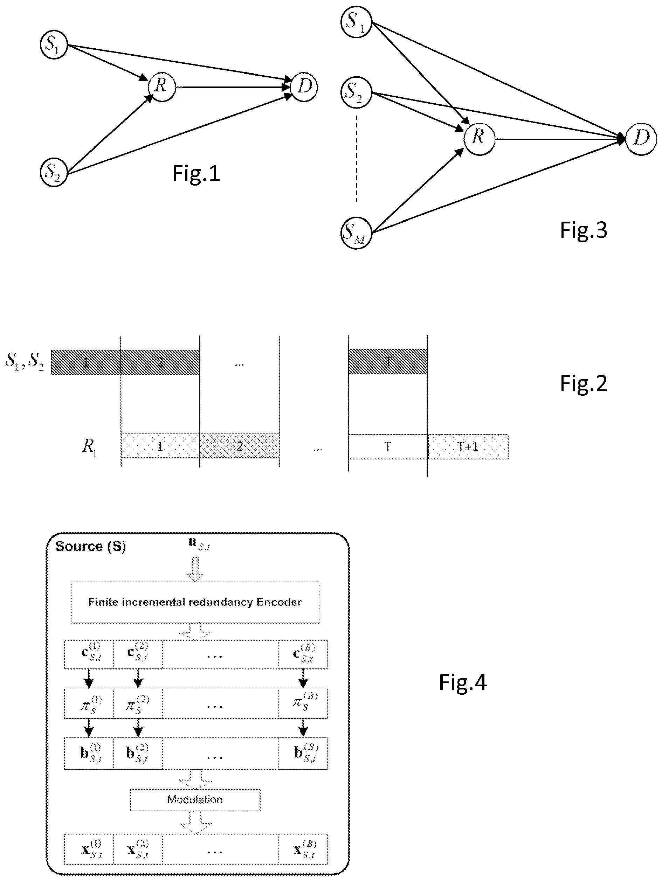

Pour augmenter la couverture, fiabiliser les communications et plus généralement améliorer les performances, une approche consiste à s'appuyer sur des relais pour augmenter l'efficacité spectrale (*gain de codage*) et donc améliorer l'efficacité de transmission et la fiabilité des systèmes (*gain de diversité*). La topologie de base des systèmes MARC illustrée par la figure 1 est telle que les sources, noeuds $S_1$ et $S_2$, diffusent leurs séquences d'informations codées à l'attention du relais R et du destinataire D. Le relais décode les signaux reçus issus des sources $S_1$ et $S_2$ et ré-encode conjointement ceux-ci en ajoutant une redondance propre créant un code de réseau spatialement distribué vu du récepteur D. A la destination D, le décodage des trois séquences codées spatialement distribuées, comprenant les deux séquences codées reçues issues directement des sources S1 et S2 et la séquence codée issue du relais, repose sur des algorithmes de décodage conjoint canal et réseau.

Le codage de réseau est une forme de coopération selon laquelle les noeuds du réseau partagent non seulement leurs ressources propres (puissance, bande, etc.) mais également leur capacité de calcul, pour créer un codage distribué de plus en plus puissant au fur et à mesure que l'information se propage à travers les noeuds. Il amène des gains substantiels en termes de diversité et de codage et donc de fiabilité de transmission.

On distingue deux types de fonctionnement pour le relais : le mode half-duplex et le mode full-duplex. L'invention s'applique aux relais full duplex.

Selon le mode full-duplex, le relais reçoit les nouveaux blocs d'information de la part des deux sources et transmet simultanément au destinataire une information basée sur les blocs reçus précédemment ; le relais peut donc recevoir et émettre simultanément sur une même bande fréquentielle ou sur des bandes différentes. Comparativement au relais half-duplex, le relais full-duplex permet d'atteindre une capacité plus grande.

La demande de brevet WO 2011033237 porte sur un système MARC avec un relais full duplex et mettant en oeuvre un protocole de transmission de type chaîne de Markov. Selon ce protocole, la destination observe une superposition des informations codées par bloc émanant des deux sources $S_1$, $S_2$ et de l'information codée du bloc précédent émanant du relais. Par suite, le traitement à la réception doit exploiter conjointement plusieurs blocs successifs. Selon le protocole mis en oeuvre illustré par la figure 2, chaque source a $T$ messages de K bits chacun à transmettre pendant un intervalle de transmission $t$ (time slots), $t \in \{1, \ldots, T\}$. A la fin de chaque intervalle de transmission $t$ où $t \in \{1, \ldots, T\}$, le relais $R_1$ essaye de décoder les messages des sources et de transmettre pendant l'intervalle de transmission $t + 1$ le résultat d'une fonction déterministe des messages décodés. Le protocole nécessite donc $T + 1$ intervalles de transmission pour transmettre les $T$ messages. La destination tente de décoder les messages des sources à la fin de l'intervalle de transmission $T + 1$ en utilisant les signaux transmis pendant toute la période de ces $T + 1$ intervalles de transmission. Un tel protocole est complexe à mettre en oeuvre lorsque le relais effectue un décodage de type souple avec transmission des rapports logarithmique de probabilités (LLR) vers la destination.

La demande de brevet WO2012022905 porte sur un système MARC mettant en oeuvre un protocole de relayage qui ne transmet pas les mots décodés avec erreur selon une technique dite SDF Selective Decode and Forward. La détection d'erreur au relais est basée sur une vérification du CRC (abréviation de Cyclic Redundancy Check) inclus dans les messages sources. Ce protocole permet de diminuer la complexité du décodage à la destination et au relais tout en conservant une capacité élevée lorsque le protocole est mis en oeuvre avec un relais full duplex (FD abréviation de Full duplex). En référence à la figure 2, si le relais a décodé correctement les sources à la fin de l'intervalle de transmission *t* alors il transmet pendant l'intervalle *t* + 1 un signal utile pour aider les deux sources. Si seule une source est correctement décodée alors le signal est représentatif de seulement cette source. Si aucune source n'est correctement décodée alors le relais reste silencieux.

Le document "Full Diversity Distributed Coding for the Multiple Access Half-Duplex Relay Channel", par Atoosa Hatefi et al., 2011 International Symposium on Network Coding, IEEE, 25 juillet 2011 divulgue un procédé de relayage avec JNC (Joint Network-channel) codage pour full-duplex MARC.

### Caractéristiques principales de l'invention

L'invention se rapporte à la transmission d'un signal numérique dans un réseau à au moins quatre noeuds comprenant deux émetteurs, un relais et un destinataire permettant d'optimiser la capacité de transmission lorsque le relais est full duplex, qui peut donc recevoir et transmettre simultanément, tout en limitant la complexité de décodage au relais et à la destination.

L'invention a pour objet un procédé de relayage mis en oeuvre par un relais full-duplex destiné à un système de télécommunication comprenant plusieurs sources, le relais et un destinataire selon la revendication 1. Le procédé comprend :

- une étape de décodage pour estimer par source, à partir de blocs reçus correspondant à des mots de code $\mathbf{x}_{S,t}$ successifs émis simultanément par les sources pendant $T$ intervalles de transmission, tels qu'à chaque intervalle de transmission $t$, $t=1,...,T,$ un mot de code $\mathbf{x}_{S,t}$ comprend B blocs $\mathbf{x}_{S,t}^{(1)}$, $\mathbf{x}_{S,t}^{(2)}$, ..., $\mathbf{x}_{S,t}^{(B)}$ dont le premier peut être décodé de manière indépendante des autres blocs, un mot de code $\mathbf{x}_{S,t}$ codant un message $\mathbf{u}_{S,t}$ de K bits,
- une étape de détection des messages décodés sans erreurs et de décision par le relais,
- une étape de codage et de transmission vers le destinataire d'un signal représentatif des seuls messages décodés sans erreur.

Le procédé est tel que le codage et la transmission sont sous contrôle de l'étape de détection des messages décodés sans erreur et de décision conformément à un schéma de sélection, après chaque bloc reçu.

L'invention a en outre pour objet un relais full-duplex destiné à un système de télécommunication comprenant plusieurs sources, le relais et un destinataire selon la revendication 11. Ce relais comprend:

- un moyen de décodage pour estimer par source, à partir de blocs reçus correspondant à des mots de code $\mathbf{x}_{S,t}$ successifs émis simultanément par les sources pendant $T$ intervalles de transmission, tels qu'à chaque intervalle de temps $t$, $t = 1, ..., T,$ un mot de code $\mathbf{x}_{S,t}$ comprend B blocs $\mathbf{x}_{S,t}^{(1)}$, $\mathbf{x}_{S,t}^{(2)}$, ..., $\mathbf{x}_{S,t}^{(B)}$, dont le premier bloc peut être décodé de manière indépendante des autres blocs, un mot de code $\mathbf{x}_{S,t}$ codant un message $\mathbf{u}_{S,t}$ de K bits,
- un moyen de détection des messages décodés sans erreurs et de décision par le relais,
- un moyen de codage et de transmission vers le destinataire d'un signal représentatif des seuls messages décodés sans erreur.

Le relais est tel que le moyen de codage et de transmission est sous contrôle du moyen de détection d'erreur et de décision conformément à un schéma de sélection, après chaque bloc reçu.

Ainsi, le relais fait partie d'un système MARC qui comprend au moins deux sources (émetteurs) et la destination. Le système MARC peut comprendre plus de deux émetteurs (sources). Les émetteurs émettent simultanément à destination d'un même récepteur (destination) ce qui permet d'utiliser au maximum la ressource spectrale commune.

L'émission par les sources peut intervenir de manière simultanée sur une même ressource radio (temps et fréquence) ce qui permet d'utiliser au maximum la ressource spectrale commune ; les liens sources relais sont dans ce cas non orthogonaux. Il y a donc interférence entre les signaux reçus par le relais et entre les signaux reçus par la destination du fait de la superposition des signaux sources lors de la transmission d'une part entre les sources et le relais et d'autre part entre les sources et la destination (le récepteur).

Selon un mode de réalisation, les sources émettent simultanément sur une même ressource radio, l'étape de décodage au relais est itérative et comprend une détection conjointe et un décodage conjoint. La détection et le décodage conjoints dans le relais permettent de séparer les flux émis simultanément par les émetteurs.

Dans le cas où les sources émettent simultanément mais sur des ressources spectrales différentes, l'étape de détection et de décodage conjoint itératif n'est pas nécessaire au relais. Dans ce cas, le relais peut décoder chaque message des sources à partir de séquences reçues sans interférence entre les sources. Les liens sources relais sont dans ce cas orthogonaux.

Le relais peut éventuellement recevoir et émettre sur des bandes de fréquence différentes. Cette séparation de bandes est plus particulièrement intéressante pour un système MARC à un seul relais. Une telle configuration permet d'utiliser une antenne de réception dédiée et permet avant tout de simplifier les traitements de réception en limitant les perturbations dues à l'émission simultanée du relais dans la même bande.

L'utilisation d'un codage à la source (émetteurs) selon lequel le premier bloc peut être décodé de manière indépendante des autres blocs évite la nécessité d'un intervalle de transmission supplémentaire ; la transmission de T messages pour chaque émetteur est faite en T intervalles de transmission. Le codage à la source peut être selon un codage de type redondance incrémentale finie.

Le codage au relais qui comprend un codage réseau et un codage canal permet de faire bénéficier à l'ensemble des émetteurs dispersés du gain de codage d'un code réseau spatialement distribué sans diminuer l'efficacité spectrale. Ceci permet de mettre en oeuvre dans le récepteur un décodage itératif qui s'appuie sur une redondance générée dans le relais sans nécessiter d'augmenter la puissance dans les émetteurs pour atteindre une augmentation de la couverture du système et de l'efficacité spectrale.

Le protocole de transmission évite la propagation d'erreur de transmission introduite plus particulièrement lorsque les liens émetteurs vers relais sont peu fiables en ne transmettant pas les messages détectés avec erreur. L'entrelacement des messages détectés sans erreur est une technique connue nécessaire pour réaliser conjointement le décodage canal des signaux des émetteurs et du signal du relais à la destination.

Le protocole contribue à une réduction de la consommation d'énergie en luttant contre la propagation d'erreurs et en luttant efficacement contre les interférences (quand il coopère le relais transmets toujours une information utile).

Le protocole permet d'atteindre un débit maximal en commandant le codage et la transmission sans attendre que les messages de tous les émetteurs soient décodés sans erreur et sans attendre la fin de l'intervalle de transmission ou sans attendre le dernier intervalle de transmission. Ainsi, le relais transmet pendant un intervalle de transmission une redondance portant sur un message décodé sans erreur pendant le même intervalle de transmission. Il y a alors transmission quasi immédiate à la destination d'une redondance supplémentaire déterminée par le relais et ceci tout en poursuivant le décodage par le relais des messages provenant des autres émetteurs ce qui n'est pas possible avec un relais de type half duplex. Le protocole est particulièrement performant puisqu'en exploitant totalement la propriété du relais full duplex de pouvoir recevoir et émettre simultanément il ne nécessite pas de seuil portant sur un nombre d'intervalles de transmission pour décider d'un basculement entre la détection et le codage des messages détectés sans erreur.

Dans le cas où les différents messages transmis par les émetteurs sont indépendants entre eux, le protocole évite l'introduction d'une latence inutile dans le traitement à la réception de ces messages comme peut le faire l'art antérieur en attendant la fin de l'intervalle de transmission T+1 pour tenter de décoder l'ensemble des messages ou en attendant au relais qu'un certain nombre d'intervalles de transmission soit écoulé avant de passer au codage. Au lieu d'être silencieux lors d'un intervalle de transmission $t \in \{2, ..., T\}$ en l'absence d'un message décodé sans erreur à la fin de l'intervalle de transmission t - 1, le relais peut aider n'importe quel message décodé sans erreur antérieurement c'est-à-dire pendant les intervalles 1, ..., t - 1. Le protocole de transmission selon l'invention assure ainsi une exploitation totale des capacités full duplex d'un relais et conduit à une capacité optimale de transmission.

Les relais peuvent tout aussi bien être des relais fixes que des relais mobiles. Compte tenu de la densité de communications à transmettre dans des zones fortement peuplées, le nombre de relais peut être important et très supérieur à deux. En effet, pour couvrir de telles zones, des relais fixes peuvent être utilisés de préférence à des stations de base dont le coût peut être nettement supérieur. De manière alternative, des relais mobiles peuvent être utilisés. Ces relais mobiles sont typiquement des terminaux mobiles.

Selon un mode de réalisation, la détection de messages décodés sans erreurs est effectuée au moyen d'un code de type CRC inclus dans les messages $\mathbf{u}_{S,t}$ de K bits.

Selon un mode de réalisation, les messages décodés sans erreur sont mémorisés.

En mémorisant les messages décodés sans erreur, le relais peut utiliser plusieurs fois c'est-à-dire pendant plusieurs intervalles de transmission un même message décodé sans erreur pour générer le signal vers le destinataire.

Selon un mode de réalisation, en l'absence de message décodé sans erreur pendant un intervalle de transmission t courant, l'étape de détection d'erreur et de décision autorise le codage et la transmission d'un message décodé sans erreur pendant un intervalle de transmission précédent.

Ainsi, au lieu d'être silencieux pendant les intervalles suivants l'intervalle t courant en attendant de décoder correctement le message d'une autre source, le relais peut continuer à transmettre la redondance déterminée sur le message de la source décodée sans erreur pendant un intervalle précédent 1, ... , t - 1.

Selon un mode de réalisation, la décision autorise le codage et la transmission d'un message dès qu'il est décodé sans erreur.

Ainsi, le relais selon l'invention transmet sans délai à la destination, c'est-à-dire sans attendre la fin de l'intervalle de transmission, une redondance se rapportant à la source décodée sans erreur permettant ainsi d'aider la destination à décoder cette même source. Ce gain apporté pour une source peut bénéficier aux autres sources. En effet, en libérant des moyens de décodage aussi bien au relais qu'à la destination pour les concentrer sur les sources non encore correctement décodées, le protocole augmente la probabilité de décoder sans erreur toutes les sources.

Selon un mode de réalisation, la détection et le décodage sont sous contrôle de l'étape de détection des messages décodés sans erreurs et de décision conformément à un schéma de sélection, après chaque bloc reçu.

Selon ce mode, la détection et le décodage peuvent être adaptée en fonction de la détection d'erreur.

Selon un mode de réalisation, si tous les messages sont décodés sans erreur pendant un intervalle de transmission t courant, l'étape de détection des messages décodés sans erreurs et de décision stoppe la détection et le décodage jusqu'à la fin de l'intervalle de transmission courant et autorise le codage et la transmission.

Ce mode permet plus particulièrement d'accentuer la réduction de la consommation d'énergie en évitant toute dépense inutile des moyens de détection et de décodage. Il permet en outre de concentrer l'énergie du relais sur d'autres moyens.

Selon un mode de réalisation, le schéma de sélection est tel qu'à chaque intervalle de transmission t courant, le signal transmis est représentatif des messages décodés sans erreur jusqu'à l'intervalle de transmission t courant.

Ainsi, le destinataire peut bénéficier de plusieurs redondances différentes pour un même message correctement décodé par le relais. L'exploitation de ces différentes occurrences par le destinataire contribue à une augmentation de la probabilité à décoder correctement les messages reçus.

Selon un mode de réalisation, le schéma de sélection est tel que pendant chaque intervalle de transmission t courant, le signal transmis est représentatif des messages qui ont été décodés sans erreur uniquement pendant l'intervalle de transmission t courant.

Ce mode a l'avantage d'être simple car il nécessite peu de signalisation.

Selon un mode de réalisation, l'étape de codage et de transmission comprend un entrelacement par source pour laquelle un message est décodé sans erreur avant un codage réseau.

L'entrelacement en entrée du codage réseau permet d'avoir à la destination une structure similaire à une concaténation parallèle (similaire à un turbo-code distribué). En fonction du type de décodage du codage réseau à la destination les entrelacements peuvent être distincts ou pas entre les sources.

Selon un mode de réalisation, l'étape de codage et de transmission comprend un codage réseau suivi d'un premier entrelacement, d'un codage canal et d'un deuxième entrelacement distinct du premier.

Le deuxième entrelacement permet d'attribuer une certaine signature au signal transmis par le relais qui permet de le distinguer des signaux transmis simultanément par les émetteurs. Après séparation du signal transmis par le relais, le premier entrelacement éventuellement variable en fonction du bloc permet une séparation (au sens de l'indépendance statistique) entre le codage réseau et le codage canal.

Selon un mode de réalisation, le relais full-duplex comprend en outre un moyen de mémorisation des messages décodés sans erreur.

Selon un mode de réalisation, le relais full-duplex est tel que le moyen de décodage est sous contrôle du moyen de détection d'erreur et de décision conformément à un schéma de sélection, après chaque bloc reçu.

Selon un mode de réalisation, le relais full-duplex est tel que le moyen de codage et de transmission comprend un entrelaceur par source pour laquelle un message est décodé sans erreur en entrée d'un codeur réseau.

Selon un mode de réalisation, le relais full-duplex est tel que le moyen de codage et de transmission comprend un codeur réseau suivi d'un premier entrelaceur, d'un codeur canal et d'un deuxième entrelaceur distinct du premier.

Les avantages du relais full duplex sont les mêmes que ceux du procédé de relayage. Par conséquent, ils ne sont pas détaillés.

L'invention a en outre pour objet un système MARC dans lequel le relais est un relais full duplex selon un objet de l'invention.

Selon une implémentation préférée, les étapes du procédé de relayage sont déterminées par les instructions d'un programme de relayage incorporé dans un ou plusieurs circuits électronique telles des puces elle-même pouvant être disposées dans des dispositifs électroniques du système MARC. Le procédé de relayage selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

L'invention a donc en outre pour objet un programme d'ordinateur sur un support d'informations, ledit programme comportant des instructions de programme adaptées à la mise en oeuvre d'un procédé de relayage d'un signal numérique selon l'invention, lorsque ledit programme est chargé et exécuté dans un relais destiné à un système MARC destiné à mettre en oeuvre le procédé de relayage.

Et l'invention a en outre pour objet un support d'informations comportant des instructions de programme adaptées à la mise en oeuvre d'un procédé de relayage d'un signal numérique selon l'invention, lorsque ledit programme est chargé et exécuté dans un relais destiné à un système MARC destiné à mettre en oeuvre le procédé de relayage.

## Liste des figures

D'autres caractéristiques et avantages de l'invention apparaîtront plus clairement à la lecture de la description suivante de modes de réalisation, donnés à titre de simples exemples illustratifs et non limitatifs, et des dessins annexés, parmi lesquels :

- la figure 1 est un schéma illustrant la topologie de base des systèmes MARC,
- la figure 2 est un schéma représentant un protocole de coopération de l'art antérieur selon lequel les sources transmettent pendant $T$ intervalles de transmission et le relais coopère après la fin de chaque intervalle ce qui conduit à une coopération nécessitant $T + 1$ intervalles de transmission,
- la figure 3 est un schéma illustrant la topologie d'un système MARC à N émetteurs, un relais et une destination,
- la figure 4 est un schéma d'un mode de réalisation du traitement mis en oeuvre par une source selon l'invention,
- la figure 5 est un schéma d'un mode de réalisation d'un relais selon l'invention,
- la figure 6 est un organigramme du procédé selon l'invention mis en oeuvre par le relais R,
- la figure 7 est un schéma d'un mode de réalisation du module DDU de détection et de décodage d'un relais selon l'invention,
- la figure 8 est une représentation sous forme de facteur graphe de la structure itérative du module DDU utilisée pour décoder la source S pendant les intervalles de transmission $t \in \{1, ..., T\}$,
- la figure 9 est un schéma d'un mode de réalisation du module ETU de codage et de transmission d'un relais selon l'invention,
- la figure 10 représente un exemple de coopération du relais $R_1$ d'un système MARC à deux sources $S_1$ et $S_2$ lorsqu'il n'y a qu'un seul intervalle de transmission divisé en B sous intervalles,
- les figures 11 et 12 représentent des exemples de coopération du relais $R_1$ d'un système MARC à deux sources $S_1$ et $S_2$ pendant les intervalles de transmission $t \in \{1, ..., T\}$ chacun divisé en en $B$ sous intervalles
- la figure 13 est une représentation sous forme de facteur graphe de la structure itérative du décodeur de la destination utilisée pour décoder les sources $S_1$ à $S_M$ pendant les intervalles de transmission de $t - Q + 1$ à $t$.

## Description de modes de réalisation particuliers

Le contexte de l'invention est celui où plusieurs sources (émetteurs) $S_1,...,S_M$ veulent envoyer leurs messages respectifs à une destination commune D avec l'aide d'un relais R full duplex comme illustré par la figure 3.

Il n'y a aucune contrainte sur le canal de transmission ; il peut être à évanouissement rapide (fast fading) ou lent (slow fading), il peut être sélectif en fréquence, et il peut être MIMO. Dans la suite de la description, les noeuds (sources, relais et destination) sont supposées parfaitement synchronisés et les sources sont indépendantes (il n'y a pas de corrélation entre elles).

Un cycle de transmission est décomposé en $T$ intervalles de transmission (time slots). La durée d'un cycle dépend du paramétrage du système MARC et en particulier de la couche MAC selon le découpage en sept couches de l'OSI. A chaque intervalle de transmission, chaque source a un message de K bits à transmettre. Une information de type CRC fait partie du message de K bits transmis par une source et est utilisée pour déterminer si un message reçu est correctement décodé. Les $T$ messages d'une source peuvent être indépendants entre eux ou peuvent être corrélés et former une trame.

Les sources émettent simultanément. Le relais tente de transmettre à la destination un signal utile représentatif des messages estimés pour aider les communications entre les sources et la destination.

$\mathbb{F}_2$ est le corps de Galois à deux éléments, **R** est le corps des réels et $\mathbb{C}$ est le corps des complexes.

Le schéma de transmission aux sources est illustré par la figure 4.

A chaque intervalle de transmission $t$, $t=1,...,T$, chaque source S parmi les M sources $\{S_1, S_2,...,S_M\}$ a un message $\mathbf{u}_{S,t}$ comportant K bits d'information à transmettre,

$$\mathbf{u}_{S,t} \in \mathbb{F}_2^K.$$

Le message $\mathbf{u}_{S,t}$ comprend un code de type CRC qui permet de vérifier l'intégrité du message $\mathbf{u}_{S,t}$.

Les sources $\{S_1, S_2,...,S_M\}$ statistiquement indépendantes effectuent un codage du message $\mathbf{u}_{S,t}$ au moyen d'un code à redondance incrémentale et transforment le message $\mathbf{u}_{S,t}$ en $n_S$ bits notés

$$\mathbf{c}_{s,t} \in \mathbb{F}_2^{n_S}.$$

Le mot $c_{s,t}$ de code obtenu est segmenté en $B$ blocs de redondance, chacun transmis pendant un sous intervalle, notés

$$\mathbf{c}_{S,t}^{(b)} \in \mathbb{F}_2^{n_{S,b}}$$

avec $b = 1,2,...,B$. Chaque bloc comprend $n_{S,b}$ bits, $n_S = \sum_{b=1}^{B} n_{S,b}$. Le code à redondance incrémentale peut être de type systématique, les bits d'information sont alors inclus dans le premier bloc : $\mathbf{u}_{S,t} \in \mathbf{c}_{S,t}^{(1)}$. Que le code à redondance incrémentale soit ou pas de type systématique, il est tel que le premier bloc $c_{S,t}^{(1)}$ parmi les B blocs peut être décodé de manière indépendante des autres blocs. Le rendement de codage le plus élevé à la source $S$ est $K/n_{S,1}$ et il ne peut pas être plus grand que un, $n_{S,1} > K$. Le rendement de codage minimum pour une source S est $K/n_S$. Chaque bloc $\{c_{S,t}^{(b)} : 1 < b \le B\}$ après le premier bloc comprend des bits de parité qui ajoutent une redondance au premier bloc, chacun des blocs $\{c_{S,t}^{(b)} : 1 < b \le B\}$ peut être décodé conjointement avec le premier bloc.

Le code à redondance incrémentale peut être réalisé en pratique par exemple au moyen d'une famille finie de codes linéaires poinçonnés à rendements compatibles ou de codes sans rendement modifiés pour fonctionner avec des longueurs finies : code raptor (RC), turbo code poinçonné de rendement compatible (rate compatible punctured turbo code, RCPTC), code convolutionnel poinçonné de rendement compatible (rate compatible punctured convolutional code, RCPCC), LDPC de rendement compatible (rate compatible low density check code).

Chaque bloc $\mathbf{c}_{S,t}^{(b)}$ est entrelacé par un entrelaceur distinct noté $\pi_S^{(b)}$, le mot de code après entrelacement est noté $\mathbf{b}_{S,t} = [\mathbf{b}_{S,t}^{(1)} \quad \mathbf{b}_{S,t}^{(2)} \quad ..., \quad \mathbf{b}_{S,t}^{(B)}]$. Les entrelaceurs permettent de lutter contre les évanouissements qui peuvent intervenir lors de la transmission par le canal et permettent de donner à chaque source une empreinte qui facilite la séparation des sources par le relais et par la destination. Chaque partie entrelacée $\mathbf{b}_{S,t}^{(b)}$ du mot de code est modulée pour obtenir un mot de code complexe $\mathbf{x}_{S,t} = [\mathbf{x}_{S,t}^{(1)} \quad \mathbf{x}_{S,t}^{(2)} \quad ..., \quad \mathbf{x}_{S,t}^{(B)}]$ avec $\mathbf{x}_{S,t}^{(b)} \in \mathcal{X}^{N_b}$, $b = 1,2,...,B$ où $\mathcal{X} \subset \mathbb{C}$ désigne un signal complexe de cardinalité $|X| = 2^{q_S}$ et où $N_b = n_{S,b}/q_S$.

Chaque source S parmi les M sources $\{S_1, S_2,...,S_M\}$ peut utiliser un rendement minimum de codage $K/n_S$ et un ordre de modulation $q_s$ différents de ceux des autres sources dans la mesure où les nombres de sous intervalles de transmission des mots de code complexes émis sont identiques entre les sources : $n_{S,b}/q_S = N_b$, $b = 1,2,...,B$.

Chaque source S émet le mot de code $\mathbf{x}_{S,t} = [\mathbf{x}_{S,t}^{(1)}, \mathbf{x}_{S,t}^{(2)}, ..., \mathbf{x}_{S,t}^{(B)}]$ composé de B blocs pendant un intervalle de transmission qui se décompose en B sous intervalles. Quel que soit b, $1 \leq b \leq B$, la concaténation (ou accumulation) des blocs 1 à b est elle-même un mot de code puisque issue du codeur à redondance incrémentale.

Pour simplifier la structure de réception du relais et de la destination, les sources décrites ont des entrelaceurs, un codeur et un modulateur qui ne varient pas en fonction de l'intervalle de transmission $t$, $t=1,...,T$ mais qui peuvent tout aussi bien être variables.

L'invention propose une nouvelle approche de la coopération d'un relais d'un système MARC pour aider les sources qui transmettent et obtenir ainsi une amélioration de l'efficacité spectrale de la transmission tout en permettant un décodage simple et efficace dans le récepteur du destinataire.

Un procédé de relayage selon l'invention est mis en oeuvre par le au moins un relais full-duplex destiné à un système MARC.

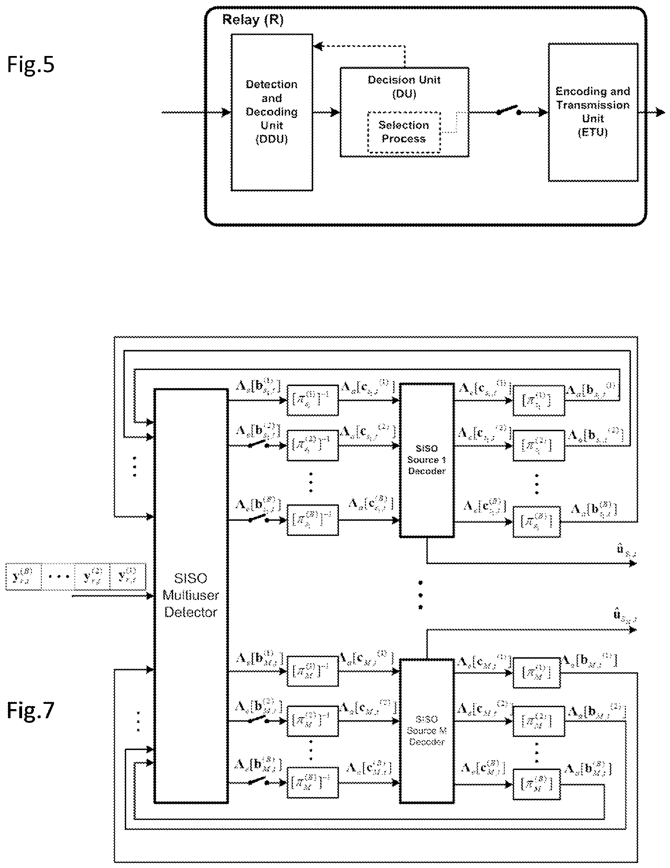

Ce relais R selon l'invention est illustré par la figure 5. Le relais comprend un module de détection et de décodage DDU suivi d'un module de décision DU et d'un module de codage et de transmission ETU. Le module de détection et de décodage DDU délivre périodiquement une version estimée des messages décodés des sources. Le module de décision DU teste le CRC des messages estimés fournis par le module DDU pour déterminer les messages décodés sans erreur, décide si le relais doit transmettre et quelle information il doit transmettre à chaque sous intervalle pendant les $T$ intervalles de transmission. Le module de codage et de transmission ETU assure la transmission du signal utile à la destination pendant la phase de coopération du relais. Les informations incluses dans le signal sont sélectionnées par le module de décision DU.

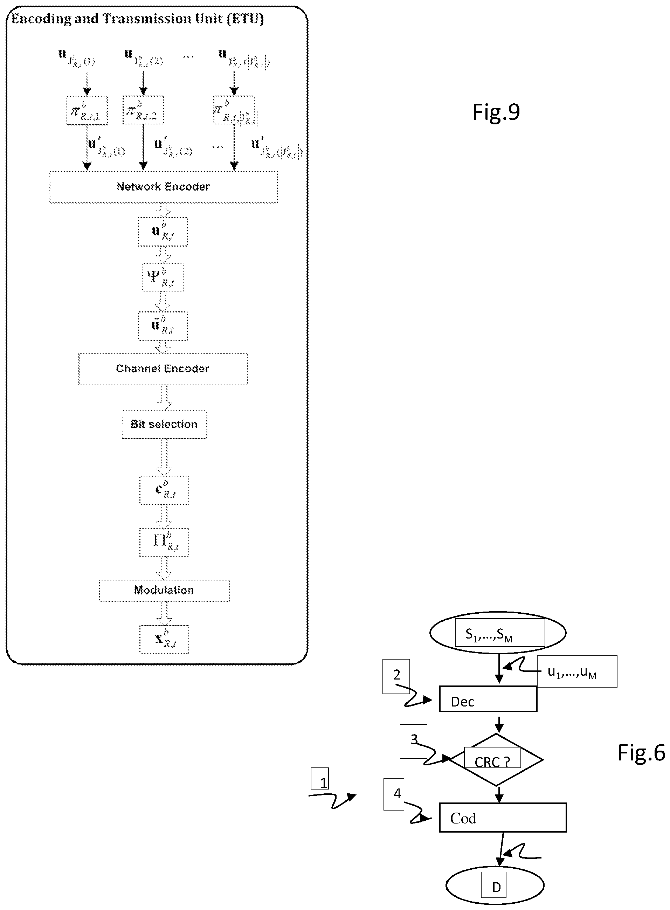

Un organigramme du procédé mis en oeuvre par le relais R est illustré par la figure 6. Le procédé 1 comprend une étape 2 de décodage, une étape 3 de détection d'erreurs et de décision et une étape 4 de codage et de transmission vers le destinataire d'un signal représentatif des seuls messages décodés sans erreur. L'étape de détection d'erreur et de décision contrôle le codage et la transmission et alimente conformément à un schéma de sélection après chaque bloc reçu le codage. Selon un mode de réalisation, l'étape de détection d'erreur et de décision contrôle en outre le décodage.

L'étape 2 de décodage est mise en oeuvre par le module DDU de détection et de décodage du relais. Cette étape de détection et de décodage fournit une estimation des messages à partir des mots reçus correspondant aux mots émis $\mathbf{x}_{S,t}=[\mathbf{x}_{S,t}^{(1)}, \mathbf{x}_{S,t}^{(2)}, ..., \mathbf{x}_{S,t}^{(B)}]$ par chaque source S parmi les M sources $\{S_1, S_2,...,S_M\}$.

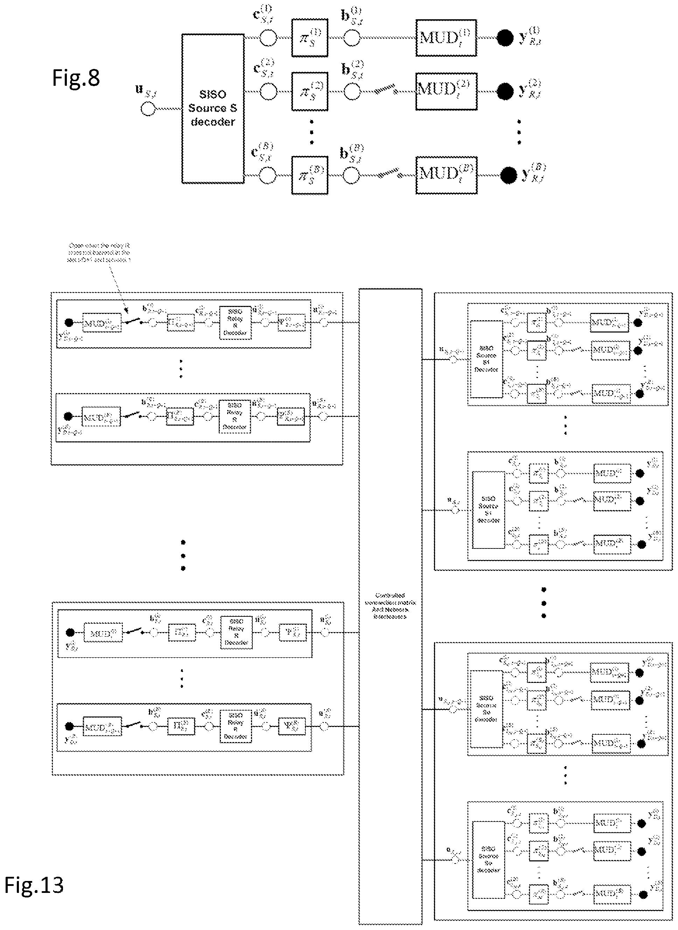

Dans le cas d'une émission simultanée sur une même ressource radio, la détection et le décodage par le relais sont effectués de manière conjointe et itérative. La structure du module de détection et de décodage DDU est illustrée par la figure 7 et sous forme simplifiée pour une source par la figure 8. Le module DDU a une structure itérative constituée d'un détecteur multi utilisateurs (MUD) souple ou en terme anglo-saxon Soft In Soft Out MUD (SISO MUD) suivi d'autant de décodeurs de canal souples en parallèle que de sources $\{S_1, S_2,...,S_M\}$. Pour un bloc b reçu, $b \in (1,2,...,B)$, pendant l'intervalle de transmission $t$, $t=1,...,T$, la séquence reçue s'exprime sous la forme :

$$\mathbf{y}_{R,t}^{(b)} = \sum_{i=1}^{M} h_{S_i,R,t} \mathbf{x}_{S_i,t}^{(b)} + \mathbf{n}_{R,t}^{(b)}$$

dans laquelle $h_{S_i,R,t} \in \mathbb{C}$ représente le gain de canal entre la source $S_i$ et le relais R et $\mathbf{n}_{R,t}^{(b)} \in \mathbb{C}^{N_b}$ représente un bruit additif gaussien. Le module DDU utilise le bloc b courant $\mathbf{y}_{R,t}^{(b)}$ et tous les blocs précédemment reçus $\mathbf{y}_{R,t}^{(1)}$, $\mathbf{y}_{R,t}^{(2)}$, , $\mathbf{y}_{R,t}^{(b-1)}$ pour obtenir une estimation des messages $\hat{u}_{S,t}$, $\hat{u}_{S2,t}$, ..., $\hat{u}_{SM',t}$ des sources.

A la fin de la réception du premier bloc, à chaque itération le détecteur multi utilisateurs MUD calcule sous forme de rapport de vraisemblance (LLR Log-Likelihood-Ratio) la probabilité a posteriori (APP) de chaque bit codé entrelacé de chaque source S :

$$\mathrm{LAPPR} : \Lambda\left(\left[\mathbf{b}_{S,t}^{(1)}\right]_k\right) \cong \log\left(\frac{\Pr\left(\left[\mathbf{b}_{S,t}^{(1)}\right]_k = 1 \,|\mathbf{y}_{R,t}^{(1)}\right)}{\Pr\left(\left[\mathbf{b}_{S,t}^{(1)}\right]_k = 0 |\mathbf{y}_{R,t}^{(1)}\right)}\right) \qquad k = 1,2,...,n_{S,1}$$

expression dans laquelle $n_{S,1}$ est le nombre de bits transmis par chaque source S dans le premier bloc. Ce LAPPR peut s'écrire sous la forme :

$$\Lambda\left(\left[\mathbf{b}_{S,t}^{(1)}\right]_k\right) = \Lambda_{\mathrm{a}}\left(\left[\mathbf{b}_{S,t}^{(1)}\right]_k\right) + \Lambda_{\mathrm{e}}\left(\left[\mathbf{b}_{S,t}^{(1)}\right]_k\right)$$

expression dans laquelle $\Lambda_{\mathrm{a}}\left(\left[\mathbf{b}_{S,t}^{(1)}\right]_k\right)$ est le logarithme du rapport de probabilité a priori (LAPR) fournit par le décodeur de canal SISO de chaque source S à l'itération précédente, $\Lambda_{\mathrm{e}}\left(\left[\mathbf{b}_{S,t}^{(1)}\right]_k\right)$ est l'information extrinsèque associée au bit $\left[\mathbf{b}_{S,t}^{(1)}\right]_k$.

Le vecteur $\Lambda_{\mathrm{e}}\left(\left[\mathbf{b}_{S,t}^{(1)}\right]_k\right)$ est desentrelacé par un desentrelaceur $[\pi_S^{(1)}]^{-1}$, la sortie $\Lambda_{\mathrm{a}}\left(\left[\mathbf{c}_{S,t}^{(1)}\right]_k\right)$ est le logarithme du rapport de probabilité a priori du premier bloc. Le décodeur de canal SISO de la source S utilise $\Lambda_{\mathrm{a}}\left(\left[\mathbf{c}_{S,t}^{(1)}\right]_k\right)$ pour fournir une version estimée $\hat{u}_{S,t}$ du message $\mathbf{u}_{S,t}$ au module DU et pour fournir une information extrinsèque $\Lambda_e\left[\mathbf{c}_{S,t}^{(1)}\right]$ des bits. Le vecteur de ces informations extrinsèques est entrelacé par l'entrelaceur $\pi_S^{(1)}$. La sortie $\Lambda_a\left[\mathbf{b}_{S,t}^{(1)}\right]$ de l'entrelaceur (après le décodage SISO de la source 1) est rebouclée sur l'entrée du détecteur multi utilisateurs SISO $MUD_t^{(b)}$ et marque la fin d'une itération.

Les itérations du module DDU s'arrêtent soit parce qu'elles atteignent un nombre maximal d'itérations soit sous contrôle de l'étape de détection d'erreurs et de décision. Par exemple, l'étape de détection d'erreurs et de décision n'autorise plus la détection et le décodage si toutes les sources ont été détectées sans erreur avant la fin de l'intervalle de transmission.

A la fin de la réception d'un nouveau bloc b, les interrupteurs correspondant à ce bloc b et à tous les blocs précédents sont basculés. La procédure décrite pour le premier bloc est répétée mais en considérant $\underline{\mathbf{b}}_{S,t}^{(b)} = [\mathbf{b}_{S,t}^{(1)}, \mathbf{b}_{S,t}^{(2)}, ..., \boldsymbol{b}_{S,t}^{(b)}]$ en lieu et place de $[\mathbf{b}_{S,t}^{(1)}]$.

A la fin de la réception du $B^e$ bloc tous les interrupteurs du DDU sont basculés et la procédure décrite pour le premier bloc est répétée mais en considérant $\underline{\mathbf{b}}_{S,t}^{(B)} = [\mathbf{b}_{S,t}^{(1)}, \mathbf{b}_{S,t}^{(2)}, ..., \mathbf{b}_{S,t}^{(B)}]$ en lieu et place de $[\mathbf{b}_{S,t}^{(1)}]$.

La figure 8 illustre sous forme d'un facteur-graphe le principe de la détection multi utilisateurs et du décodage conjoint. Les noeuds de variable étant représentés par des cercles et les noeuds de contrainte par des carrés, un noeud de contrainte est une fonction des noeuds de variable lui étant rattachés. Ainsi, le noeud de contrainte $\pi_S^{(b)}$ représente la fonction de contrainte $f\left(\boldsymbol{b}_{S,t}^{(b)}, \mathbf{c}_{S,t}^{(b)}\right)$ qui impose que $\boldsymbol{b}_{S,t}^{(b)}$ et $\mathbf{c}_{S,t}^{(b)}$ soient liés par l'entrelaceur $\pi_S^{(b)}$, c.a.d., $\boldsymbol{b}_{S,t}^{(b)} = \pi_S^{(b)} \boldsymbol{c}_{S,t}^{(b)}$ ou $\boldsymbol{c}_{S,t}^{(b)} = [\pi_S^{(b)}]^{-1} \boldsymbol{b}_{S,t}^{(b)}$. Le noeud de contrainte $MUD_t^{(b)}$ est lié aux noeuds de variable $\boldsymbol{b}_{S_1,t}^{(b)}$, ..., $\boldsymbol{b}_{S_M,t}^{(b)}$ et l'observation $\mathbf{y}_{R,t}^{(b)}$. Comme nous nous intéressons au noeud de variable $u_{S,t}$ seul le noeud de variable $\boldsymbol{b}_{S,t}^{(b)}$ est représenté. Les règles dites de "Sum Product Algorithm" [1] permettent de calculer les croyances d'un noeud de contrainte vers un noeud de variable en prenant en compte les croyances incidentes des autres noeuds de variables ; cela correspond à une activation de la détection d'utilisateurs multiples pour le noeud de contrainte $MUD_t^{(b)}$ ou à une activation de décodage pour le noeud de contrainte « SISO Source S décoder » conformément à la figure 7. Les croyances/ou message probabiliste (par bit) sont donc ici les informations extrinsèques sous forme de rapports de vraisemblance logarithmique ou en terminologie anglo-saxonne « extrinsic Log Likelihood Ratios/ extrinsic LLRs ».

Ainsi pendant l'intervalle de transmission t et le bloc b l'enchaînement du traitement est le suivant. Pour chaque source $S \in \{S_1,...,S_M\}$, le module DDU enchaîne les étapes suivantes :

1- Si les $MUD_t^{(l)}$ $l = 1, ..., b$ sont activés, ils génèrent leurs croyances concernant les valeurs des noeuds variables $\underline{\mathbf{b}}_{S,t}^{(b)}$ (ces croyances sont généralement sous la forme de vecteurs de valeurs de LLR).

2- Les croyances concernant $\underline{\mathbf{b}}_{S,t}^{(b)}$ sont converties dans des croyances concernant $\underline{\mathbf{c}}_{S,t}^{(b)} = [\mathbf{c}_{S,t}^{(1)}, \mathbf{c}_{S,t}^{(2)}, ..., \mathbf{c}_{S,t}^{(b)}]$ par les desentrelaceurs $[\pi_S^{(l)}]^{-1}$ $l = 1, ..., b$.

3- Les croyances concernant $\underline{\mathbf{c}}_{S,t}^{(b)}$ sont passées au décodeur de canal SISO de la source $S$. En retour, celui-ci génère sa croyance concernant les noeuds variables $\mathbf{u}_{S,t}$ et $\underline{\mathbf{c}}_{S,t}^{(b)}$.

4- Les croyances concernant $\mathbf{u}_{S,t}$ sont passées au module DU.

5- Si le module DU autorise le module DDU à continuer alors la croyance concernant $\underline{\mathbf{c}}_{S,t}^{(b)}$ est convertie en croyance concernant $\underline{\mathbf{b}}_{S,t}^{(b)}$ par l'entrelaceur $\pi_S^{(l)}$ $l = 1, ..., b$.

6- Les croyances concernant $\underline{\mathbf{b}}_{S,t}^{(b)}$ sont passées aux $MUD_t^{(l)}$ $l = 1, ..., b$.

7- Répétition des étapes 1 à 6.

L'étape 3 de détection des messages décodés sans erreurs et de décision par le relais est mise en oeuvre par le module DU. Pendant chaque intervalle de transmission $t=1,...,T$, l'étape 3 détecte les erreurs sur les messages estimés $\hat{\boldsymbol{u}}_{S_1,t}$, $\hat{\boldsymbol{u}}_{S_2,t}$,..., $\hat{\boldsymbol{u}}_{S_M,t}$ à la fin de chaque sous intervalle de transmission $b \in \{1,2,...,B\}$. Selon un mode de réalisation, la détection d'erreurs est effectuée en exploitant une information de type CRC incluse dans le premier des B blocs provenant des sources.

Le contrôle du codage et de la transmission après chaque bloc reçu est tel que :

1. En l'absence de message décodé sans erreur, le module DU décide conformément à un schéma de sélection quels messages décodés au cours des précédents intervalles de transmission doivent être aidés. Par exemple, seul le dernier message décodé correctement peut être aidé ou par exemple n'importe quel ensemble de messages décodés sans erreur peut être aidé.

2. Si quelques sources sont décodées sans erreur, le module autorise d'aider ces sources i.e. autorise le codage et la transmission mise en oeuvre par le module ETU pour ces sources.

3. Si toutes les sources sont décodées sans erreur, le module DU commande au module ETU d'aider toutes les sources jusqu'à la fin de l'intervalle de transmission courant i.e. l'étape de détection d'erreur et de décision autorise le codage et la transmission des messages de toutes les sources jusqu'à la fin de l'intervalle de transmission courant. Selon un mode de réalisation, le module DU commande au module DDU d'arrêter de traiter les signaux reçus i.e. l'étape de détection d'erreur et de décision interdit le décodage jusqu'à la fin de l'intervalle de transmission courant.

Le schéma de sélection est adapté en fonction de la capacité de mémorisation du relais, en fonction de la taille de la fenêtre glissante lorsque celle-ci est utilisée par le destinataire et en fonction de la quantité de signalisation supplémentaire nécessaire pour la destination. Parmi les différents schéma de sélection possibles, on peut distinguer les deux schéma extrêmes suivants.

Un premier schéma selon lequel il est autorisé d'aider n'importe quel jeu de messages de n'importe quelles sources décodés correctement pendant les précédents intervalles de transmission (les messages qui satisfont $\hat{\boldsymbol{u}}_{S,i} = \boldsymbol{u}_{S,i}$ pour tout $i = 1, ..., t - 1$ et toute source $\in \{S_1,...,S_M\}$). Ce jeu est pris en entrée du codage réseau (à un intervalle de transmission donné et un sous intervalle donné, l'information relayée peut être une fonction de n'importe quel message transmis par les sources). Ce schéma est compatible d'un décodage dit backward à la destination à condition d'utiliser une fenêtre glissante de décodage de taille $Q = T$.

Un deuxième schéma selon lequel il est autorisé d'aider seulement les messages décodés sans erreur précédemment pendant le même intervalle de transmission. Par rapport au précédent schéma, celui-ci nécessite un minimum de signalisation. La taille de mémorisation est petite : MK bits au maximum. Ce schéma est compatible d'un décodage à la destination qui utilise une fenêtre glissante de décodage de taille $Q = 1$.

L'étape 4 de codage et de transmission vers le destinataire est mise en oeuvre par le module de codage et de transmission ETU illustré par la figure 9.

Cette étape de codage et de transmission code les messages décodés sans erreur pour transmettre un signal représentatif de ces seuls messages décodés sans erreur. Le relais code conjointement les seuls messages décodés sans erreur en ajoutant une redondance propre créant un code de réseau.

Cette étape de codage et de transmission est sous contrôle de l'étape de détection d'erreurs et de décision qui autorise ou pas le codage et qui sélectionne les sources à aider.

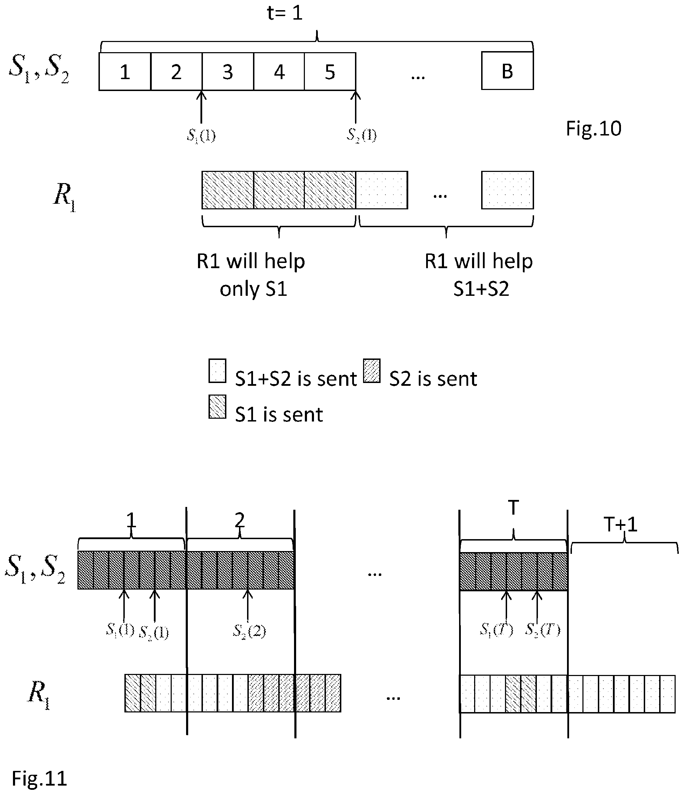

La figure 10 représente les $B$ sous-intervalles de transmission du premier intervalle de transmission. A chaque sous-intervalle $b$ de transmission correspond un bloc $b$ de données. La figure illustre un exemple de sélection quand $T$ = 1. Selon cette sélection, le relais détecte sans erreur le message de la source $S_1$ à la fin du 2e sous intervalle et le message de la source $S_2$ à la fin du 5e sous intervalle. Compte tenu que le relais est full duplex, il peut aider la source $S_1$ pendant les sous intervalles $b$ = 3,4,5 (donc sous-entendu il peut transmettre un signal représentatif) et simultanément continuer à écouter (c'est-à-dire à réceptionner). A la fin du 5e sous intervalle, le relais arrête d'écouter puisqu'il a décodé correctement tous les messages des sources et il aide les deux sources en émettant un signal issu d'un codage réseau des messages de $S_1$ et $S_2$.

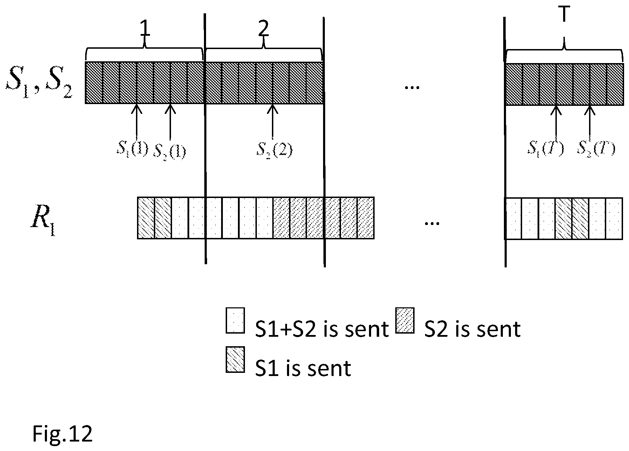

La figure 11 illustre un exemple de sélection quand $t$ = 1,...,$T$. Pendant le 1er intervalle de transmission $t$ = 1, le relais est capable de décoder sans erreur $S_1$ puis $S_2$ à la fin des sous intervalles 3 respectivement 5. Pendant l'intervalle de transmission $t$ = 2 le relais est capable de décoder sans erreur le message de $S_2$ à la fin du sous intervalle 4. Dans ce cas, pendant les sous intervalles 1, 2, 3, 4 de l'intervalle $t$ = 2, le relais continue d'aider les messages de $S_1$ et $S_2$ du 1er intervalle. A partir du sous intervalle 5 de l'intervalle $t$ = 2 le relais commence à aider le message de $S_2$ du 2e intervalle jusqu'à ce qu'un nouveau message soit correctement décodé et ainsi de suite. Le schéma de sélection de la figure 12 est identique au schéma de la figure 11 sauf en ce que le relais ne transmet plus après l'intervalle de transmission $t$ = $T$. Ainsi, le protocole selon l'invention permet de gagner un intervalle de transmission par rapport à l'art antérieur en aidant immédiatement le message décodé sans erreur sans attendre la fin de l'intervalle de transmission $t$ = $T$. Le protocole est donc plus efficace en ce qui concerne l'occupation du canal et donc la capacité de transmission.

Pendant chaque intervalle de transmission $t \in \{1,...,T\}$ et à la fin de chaque sous intervalle $b \in \{1,...,B\}$, de manière générale le module DU ordonne au module ETU de transmettre un nouveau signal généré à partir d'un nouveau jeu $J_{R,t}^b$ de messages de sources décodés sans erreur pendant des intervalles de transmission différents. Le relais entrelace en entrée du codeur réseau chaque message de ce jeu $J_{R,t}^b$ par un entrelaceur $\pi_{R,t,|J_{R,t}^b|}^b$ distinct entre les blocs $b$ et entre les messages du jeu $J_{R,t}^b$.

Le codeur de réseau est par exemple un OU exclusif sur les messages entrelacés $u_{J_{R,t}^b}^{'b}(|J_{R,t}^b|)$. La sortie du codeur réseau est un message de K bits d'information noté

$$\mathbf{u}_{R,t}^b \in \mathbb{F}_2^K.$$

Le message $\mathbf{u}_{R,t}^b$ est entrelacé par un entrelaceur noté $\Psi_{R,t}^b$. Le message entrelacé noté $\widetilde{u}_{R,t}^b$ est converti par un codeur canal suivi d'une fonction de sélection de bits en une séquence

$$\mathbf{c}_{R,t}^b \in \mathbb{F}_2^{n_R}$$

de $n_R$ bits. La séquence $\mathbf{c}_{R,t}^b$ est entrelacée par un entrelaceur distinct noté $\prod_{R,t}^b$ puis modulée pour obtenir la séquence complexe $\mathbf{x}_{R,t}^b \in \mathcal{X}^{N_b}$ dans laquelle $\mathcal{X} \subset \mathbb{C}$ représente un signal complexe de cardinalité $|X| = 2^{q_R}$.

A la fin des intervalles de transmission, la destination tente d'extraire les messages de chaque source et du relais. La séquence reçue pendant l'intervalle de transmission $t \in \{1,...,T\}$ et pendant le bloc $b \in \{1,2,...,B\}$ est la suivante :

$$\mathbf{y}_{D,t}^{(b)} = \sum_{i=1}^M h_{S_i,D,t}\mathbf{x}_{S_i,t}^{(b)} + h_{R,D,t}\mathbf{x}_{R,t}^{(b)}\mathbf{1}_{\{J_{R,t}^b \neq \phi\}} + \mathbf{n}_{D,t}^{(b)}$$

dans laquelle $h_{S_i,D,t} \in \mathbb{C}$ représente le gain de canal entre la source $S_i$ et la destination $D$, $h_{R,D,t} \in \mathbb{C}$ représente

le gain de canal entre le relais R et la destination $D$, $\mathbf{n}_{D,t}^{(b)} \in \mathbb{C}^{N_b}$ est un vecteur de bruit et $\mathbf{1}_{\{J_{R,t}^b=\phi\}}$ est un indicateur

pour indiquer si le relais est silencieux ou pas : $\mathbf{1}_{\{J_{R,t}^b=\phi\}} = \begin{cases} 1 & si\ J_{R,t}^b \neq \phi \\ 0 & sinon \end{cases}$ où $\phi$ représente l'ensemble vide.

La destination peut mettre en oeuvre une fenêtre glissante de décodage ou « sliding window decoding » ou peut mettre en oeuvre un décodage dit « backward ».

Dans le cas de la mise en oeuvre d'une fenêtre glissante de longueur $Q$, $Q \in \{1,...,T\}$, la destination débute à la fin de chaque intervalle de transmission $t \in \{Q,...,T\}$ le décodage des messages des sources pour extraire les QK bits d'information de chaque source qui sont transmis pendant les intervalles $t, t - 1,..., t - (Q - 1)$ avec l'aide du message du relais transmis pendant les intervalles $t, t - 1, ..., t - (Q - 1)$.

La taille de la fenêtre glissante peut être fixée à une valeur maximale et la destination peut décider quelle est la valeur optimale sur la base de la signalisation venant du relais. Par exemple, si la taille maximale est de trois et que la destination sait que le relais n'aide aucune source pendant le 1er intervalle en l'absence de messages décodés sans erreur alors la destination peut débuter immédiatement le décodage du 1er intervalle de transmission sans attendre trois intervalles de transmission.

La taille de la fenêtre glissante de la destination peut impacter le schéma de sélection du relais. Lors d'un intervalle de transmission $t$ donné, le schéma de sélection peut être tel que le relais n'aide pas les messages décodés sans erreur sur les intervalles qui précèdent l'intervalle $t - (Q - 1)$, i.e., les messages décodés pendant les intervalles $\in \{1,...,t - Q\}$.

La figure 13 représente la structure du décodeur de la destination sous forme de facteur graphe pendant la fenêtre glissante $Q$ qui couvre tous les intervalles de transmission de $t - (Q - 1)$ à t. Ainsi, pour chaque intervalle de transmission couvert par la fenêtre, les chaînes de détection et de décodage des sous blocs $b$, $b = 1,...B$, reçus des sources sont successivement activées en basculant par exemple des interrupteurs pour rendre les chaînes actives. Et, pour chaque intervalle de transmission couvert par la fenêtre, les chaînes de décodage des séquences reçues du relais sont activées en basculant par exemple des interrupteurs pour rendre les chaînes actives en fonction d'une information de signalisation donnant à chaque sous intervalle, c'est-à-dire à chaque bloc, l'indication d'une transmission ou pas du relais. Tous les blocs et messages reçus pendant la fenêtre $Q$ sont décodés conjointement. Le sous module *controlled connection matrix and network interleavers* effectue les connections entre les noeuds variables qui représentent les messages des sources et les noeuds variables qui représentent les séquences générées par le relais à chaque sous intervalle de chaque intervalle. Ce sous module reçoit en entrée une information de signalisation venant du relais indiquant à chaque sous intervalle le schéma de sélection utilisé par le relais. Les croyances sous forme de LLR concernant les différents noeuds variables sont échangés au sein du facteur graphe jusqu'à la convergence.

Dans le cas de la mise en oeuvre d'un décodage dit « backward », la destination tente de décoder les messages des sources à la fin de l'intervalle de transmission $t = T$, pour extraire les TK bits d'information de chaque source. Ce scénario de décodage est adapté lorsque les $T$ messages d'une source forment une trame (ou super message) qui fait qu'il est inutile de décoder un message avant de décoder les autres messages. Par contre, lorsque les messages d'une source sont indépendants, ce scénario introduit une latence inutile en imposant d'attendre la fin de l'intervalle $t = T$. Un exemple de la structure du décodeur est illustré par la figure 13. Il est facile d'obtenir le cas du décodage « backward » en prenant t=T et Q=T. Le noeud de contrainte $MUD_t^{(b)}$ est lié aux noeuds de variable $b_{S_1,t}^{(b)}$, ..., $b_{S_M,t}^{(b)}$, $b_{R,t}^{(b)}$ et à l'observation $\mathbf{y}_{D,t}^{(b)}$. Pour des raisons de clarté, nous avons dupliqué le noeud de contrainte $MUD_t^{(b)}$ par noeud de variable. Toutefois, une seule activation de la détection d'utilisateurs multiples associée au noeud de contrainte $MUD_t^b$ permet de générer les croyances (ou extrinsic LLRs) vers tous les noeuds de variable associés en prenant en compte l'observation $\mathbf{y}_{D,t}^{(b)}$ et les croyances incidentes.

Le décodeur de la figure 13 peut être cadencé de la façon suivante.

Etape 1, tous les détecteurs multi utilisateurs MUD sont activés en fonction du signal reçu :

$$\mathbf{y}_{D,t-(Q-1)}^{(1)}, ..., \mathbf{y}_{D,t-(Q-1)}^{(B)}, ..., \mathbf{y}_{D,t}^{(1)}, ..., \mathbf{y}_{D,t}^{(B)}.$$

Etape 2, les noeuds variables représentant les messages codés réseau venant du relais reçoivent les croyances sur leurs valeurs en activant leurs entrelaceurs et modules SISO correspondants.

Etape 3, les noeuds variables représentant les messages des sources reçoivent les croyances sur leurs valeurs en activant d'une part leurs entrelaceurs et SISO correspondants et d'autre part le sous module *controlled connection*

*matrix and network interleavers.*

Etape 4, sur la base des croyances reçues des noeuds variables des messages des sources, la destination vérifie si les messages $\mathbf{u}_{S_1,t-(Q-1)}$, $\mathbf{u}_{S_2,t-(Q-1)}$ ..., $\mathbf{u}_{S_M,t-(Q-1)}$ sont décodés correctement ou pas. S'ils sont correctement décodés, la destination arrête les itérations de décodage sur cette fenêtre glissante et glisse la fenêtre jusqu'à la fenêtre suivante (de t-(Q-1)+1 à t+1). Sinon, le procédé passe à l'étape 5.

Etape 5, les noeuds variables représentent les messages codés réseau du relais reçoivent les croyances sur leurs valeurs du sous module *controlled connection matrix and network interleavers.*

Etape 6, les détecteurs multi utilisateurs MUD reçoivent les croyances sur les bits formant les signaux modulés $\mathbf{y}_{D,t-(Q-1)}^{(1)}$, ..., $\mathbf{y}_{D,t-(Q-1)}^{(B)}$, ..., $\mathbf{y}_{D,t}^{(1)}$, ..., $\mathbf{y}_{D,t}^{(B)}$ ; ; celles-ci étant obtenues à partir de l'activation des entrelaceurs et modules SISO associés aux messages codés réseau et aux messages des sources.

Les étapes 1 à 6 sont répétées jusqu'à atteindre un nombre maximal d'itérations ou jusqu'à sortir de la boucle lors de l'étape 4.

Il est à noter que plusieurs messages à des intervalles de transmission autres que t-(Q-1) peuvent être décodés sans erreur. Ceux-ci serviront pour simplifier le décodage pour les prochaines fenêtres de décodage.

Le nombre de fenêtres de décodage utilisé gouverne la complexité du récepteur, il vient que seules quelques fenêtres de décodage peuvent être privilégiées dans certaines implémentations.

La destination peut faire partie de plusieurs systèmes MARC qui partagent les mêmes sources, la même destination et ont des relais différents, ces relais utilisant des ressources radio différentes entre elles.

En présence d'un second relais R', le noeud de contrainte $MUD_t^{(b)}$ est lié aux noeuds de variable $\boldsymbol{b}_{S_1,t}^{(b)}$, ..., $\boldsymbol{b}_{S_M,t}^{(b)}$, $\boldsymbol{b}_{R,t}^{(b)}$, $\boldsymbol{b}_{R',t}^{(b)}$ et à l'observation $\mathbf{y}_{D,t}^{(b)}$. Il vient que la gauche de la figure 13 est dupliquée en remplaçant R par R'. Une activation de la détection d'utilisateurs multiples associée au noeud de contrainte $MUD_t^{(b)}$ permet de générer les croyances (ou extrinsic LLRs) vers tous les noeuds de variable $\boldsymbol{b}_{S_1,t}^{(b)}$, ..., $\boldsymbol{b}_{S_M,t}^{(b)}$, $\boldsymbol{b}_{R,t}^{(b)}$, $\boldsymbol{b}_{R',t}^{(b)}$ associés en prenant en compte l'observation $\mathbf{y}_{D,t}^{(b)}$ et les croyances incidentes.

Les sources sont par exemples des utilisateurs qui cherchent à transmettre des messages à une destination commune qui est par exemple une station de base d'un réseau d'accès mobile. Les sources s'aident d'un relais qui peut être une station de base allégée ou par exemple une des sources dans le cas où cette dernière est sur le chemin entre les sources et la station de base. Les sources peuvent tout aussi bien être des stations de base qui s'adressent à la même destination.

Selon une utilisation particulière, les deux sources correspondent à deux terminaux mobiles. Selon une autre utilisation, les deux sources peuvent correspondre à deux services différents accessibles depuis un même terminal mais dans ce cas, le terminal est équipé d'au moins deux antennes qui déterminent deux canaux de propagation différents entre le terminal et le relais et entre le terminal et la destination.

Annexe :

**LLR** : « Log Likelihood Ratio »

U étant une variable aléatoire binaire, son LLR (Log-likelihood ratio) est définie par la relation :

$$LLR_u = \log\left(\frac{P_U(u=1)}{P_U(u=0)}\right)$$

relation dans laquelle $P_U$ (u) dénote la probabilité que la variable aléatoire U prenne la valeur u.

**LAPPR** : « Log A Posteriori Probability Ratio »

Il représente le LLR conditionnel à une observation qui correspond généralement à un signal reçu.

$$LAPPR_u = \log\left(\frac{P(u=1\,|y)}{P(u=0|y)}\right)$$

[1] F.R. Kschischang, B.J. Frey, and H.-A. Loeliger, "Factor graphs and the sum-product algorithm," IEEE Trans. Inform. Theory, vol. IT-47, no. 2, pp. 498-519, Feb. 2001.

**Revendications**

1. Procédé (1) de relayage mis en oeuvre par un relais full-duplex destiné à un système de télécommunication comprenant plusieurs sources ($\{S_1, S_2, ..., S_M\}$), le relais et un destinataire, comprenant :

   - une étape (2) de décodage pour estimer par source, à partir de blocs reçus correspondant à des mots de code $\mathbf{x}_{S,t}$ successifs émis simultanément par les sources pendant $T$ intervalles de transmission, tels qu'à chaque intervalle de transmission $t$, $t=1,...,T$, un mot de code $\mathbf{x}_{S,t}$ comprend B blocs $\mathbf{x}_{S,t}^{(1)}$, $\mathbf{x}_{S,t}^{(2)}$, ..., $\mathbf{x}_{S,t}^{(B)}$ dont le premier peut être décodé de manière indépendante des autres blocs, un mot de code $\mathbf{x}_{S,t}$ codant un message $\mathbf{u}_{S,t}$ de K bits avec K, B et T des naturels, $B > 2$, $T > 1$,
   - une étape (3) de détection des messages décodés sans erreurs et de décision par le relais,
   - une étape (4) de codage et de transmission vers le destinataire d'un signal représentatif des seuls messages décodés sans erreur,

   **caractérisé en ce que** le codage et la transmission sont sous contrôle de l'étape de détection des messages décodés sans erreur et de décision conformément à un schéma de sélection, après chaque bloc reçu, et **en ce que** le schéma de sélection est tel qu'un signal représentatif portant sur un message décodé sans erreur pendant un intervalle de transmission est transmis par le relais pendant le même intervalle de transmission.

2. Procédé (1) selon la revendication 1, comprenant en outre une mémorisation des messages décodés sans erreur.

3. Procédé (1) selon la revendication 1, dans lequel en l'absence de message décodé sans erreur pendant un intervalle de transmission t courant, l'étape de détection d'erreur et de décision autorise le codage et la transmission d'un message décodé sans erreur pendant un intervalle de transmission précédent.

4. Procédé (1) selon la revendication 1, dans lequel la décision autorise le codage et la transmission d'un message dès qu'il est décodé sans erreur.

5. Procédé (1) selon la revendication 1, dans lequel la détection et le décodage sont sous contrôle de l'étape de détection des messages décodés sans erreurs et de décision conformément à un schéma de sélection, après chaque bloc reçu.

6. Procédé (1) selon la revendication précédente, dans lequel si tous les messages sont décodés sans erreur pendant un intervalle de transmission t courant, l'étape de détection des messages décodés sans erreurs et de décision stoppe la détection et le décodage jusqu'à la fin de l'intervalle de transmission courant et autorise le codage et la transmission.

7. Procédé (1) selon la revendication 1, dans lequel le schéma de sélection est tel qu'à chaque intervalle de transmission t courant, le signal transmis est représentatif des messages décodés sans erreur jusqu'à l'intervalle de transmission t courant.

8. Procédé (1) selon la revendication 1, dans lequel le schéma de sélection est tel que pendant chaque intervalle de transmission t courant, le signal transmis est représentatif des messages qui ont été décodés sans erreur uniquement pendant l'intervalle de transmission t courant.

9. Procédé (1) selon la revendication 1, dans lequel l'étape de codage et de transmission comprend un entrelacement par source pour laquelle un message est décodé sans erreur avant un codage réseau.

**10.** Procédé (1) selon la revendication 1, dans lequel l'étape de codage et de transmission comprend un codage réseau suivi d'un premier entrelacement, d'un codage canal et d'un deuxième entrelacement distinct du premier.

**11.** Relais (R) full-duplex destiné à un système de télécommunication comprenant plusieurs sources ($\{S_1, S_2, ..., S_M\}$), le relais et un destinataire, comprenant :

- un moyen (DDU) de décodage pour estimer par source, à partir de blocs reçus correspondant à des mots de code $\mathbf{x}_{S,t}$ successifs émis simultanément par les sources pendant $T$ intervalles de transmission, tels qu'à chaque intervalle de temps $t$, $t = 1,...,T$, un mot de code $\mathbf{x}_{S,t}$ comprend B blocs $\mathbf{x}_{S,t}^{(1)}$, $\mathbf{x}_{S,t}^{(2)}$, ..., $\mathbf{x}_{S,t}^{(B)}$, dont le premier bloc peut être décodé de manière indépendante des autres blocs, un mot de code $\mathbf{x}_{S,t}$ codant un message $\mathbf{u}_{S,t}$ de K bits, avec K, B et T des naturels, $B > 2$, $T > 1$,
- un moyen (DU) de détection des messages décodés sans erreurs et de décision par le relais,
- un moyen (ETU) de codage et de transmission vers le destinataire d'un signal représentatif des seuls messages décodés sans erreur,

**caractérisé en ce que** le moyen (ETU) de codage et de transmission est sous contrôle du moyen (DU) de détection d'erreur et de décision conformément à un schéma de sélection, après chaque bloc reçu, et **en ce que** le schéma de sélection est tel qu'un signal représentatif portant sur un message décodé sans erreur pendant un intervalle de transmission est transmis par le relais pendant le même intervalle de transmission.

**Patentansprüche**

**1.** Übertragungsverfahren (1), welches durch ein Vollduplex-Relais durchgeführt wird, das für ein Telekommunikationssystem bestimmt ist, umfassend mehrere Quellen ($\{S_1, S_2, ..., S_M\}$), das Relais und einen Empfänger, umfassend:

- einen Schritt (2) der Decodierung um durch die Quelle zu schätzen, aus empfangenen Blöcken, welche aufeinanderfolgenden Codewörtern $x_{S,t}$ entsprechen, die gleichzeitig durch die Quellen während $T$ Transmissionsintervallen ausgegeben werden, so dass in jedem Transmissionsintervall $t$, $t=1, ..., T$ ein Codewort $x_{S,t}$ B Blöcke $x_{S,t}^{(1)}$, $x_{S,t}^{(2)}$, ..., $x_{S,t}^{(B)}$ umfasst, deren erster unabhängig von den anderen Blöcken decodiert werden kann, wobei ein Codewort $x_{S,t}$ eine Nachricht $u_{S,t}$ von K Bits codiert, wobei K, B und T natürliche Zahlen sind, $B > 2$, $T > 1$,
- einen Schritt (3) der Detektion von ohne Fehler decodierten Nachrichten und der Entscheidung durch das Relais,
- einen Schritt (4) der Codierung und der Transmission eines Signals, das nur für ohne Fehler decodierte Nachrichten repräsentativ ist, zu dem Empfänger,

**dadurch gekennzeichnet, dass** die Codierung und die Transmission unter der Steuerung des Schritts der Detektion der ohne Fehler decodierten Nachrichten und der Entscheidung gemäß einem Auswahlschema nach jedem empfangenen Block stehen, und dadurch, dass das Auswahlschema derart ist, dass ein repräsentatives Signal, das sich auf eine während eines Transmissionsintervalls ohne Fehler decodierte Nachricht bezieht, durch das Relais während desselben Transmissionsintervalls weitergeleitet wird.

**2.** Verfahren (1) nach Anspruch 1,
umfassend außerdem ein Speichern der ohne Fehler decodierten Nachrichten.

**3.** Verfahren (1) nach Anspruch 1,
wobei in Abwesenheit einer ohne Fehler decodierten Nachricht während eines aktuellen Transmissionsintervalls t der Schritt der Fehlerdetektion und der Entscheidung die Codierung und die Transmission einer ohne Fehler decodierten Nachricht während eines vorhergehenden Transmissionsintervalls autorisiert.

**4.** Verfahren (1) nach Anspruch 1,
wobei die Entscheidung die Codierung und Transmission einer Nachricht autorisiert, sobald diese ohne Fehler decodiert wird.

**5.** Verfahren (1) nach Anspruch 1,
wobei die Detektion und die Decodierung unter der Steuerung des Schritts der Detektion der ohne Fehler decodierten Nachrichten und der Entscheidung gemäß einem Auswahlschema nach jedem empfangenen Block stehen.

**6.** Verfahren (1) nach dem vorhergehenden Anspruch,
wobei, wenn alle Nachrichten während eines aktuellen Transmissionsintervalls t ohne Fehler decodiert wurden, der Schritt der Detektion der ohne Fehler decodierten Nachrichten und der Entscheidung die Detektion und die Decodierung bis zum Ende des aktuellen Transmissionsintervalls stoppt und die Codierung und die Transmission autorisiert.

**7.** Verfahren (1) nach Anspruch 1,
wobei das Auswahlschema derart ist, dass bei jedem aktuellen Transmissionsintervall t das weitergeleitete Signal für ohne Fehler decodierte Nachrichten bis zu dem aktuellen Transmissionsintervall t repräsentativ ist.

**8.** Verfahren (1) nach Anspruch 1,
wobei das Auswahlschema derart ist, dass während jedes aktuellen Transmissionsintervalls t das weitergeleitete Signal für Nachrichten repräsentativ ist, die einzig während des aktuellen Transmissionsintervalls t ohne Fehler decodiert wurden.

**9.** Verfahren (1) nach Anspruch 1,
wobei der Schritt der Codierung und der Transmission eine Verschachtelung durch eine Quelle umfasst, für die eine Nachricht vor einer Netzcodierung ohne Fehler decodiert wird.

**10.** Verfahren (1) nach Anspruch 1,
wobei der Schritt der Codierung und der Transmission eine Netzcodierung umfasst, gefolgt von einer ersten Verschachtelung, von einer Kanalcodierung und von einer zweiten Verschachtelung, die von der ersten verschieden ist.

**11.** Vollduplex-Relais (R), welches für ein Telekommunikationssystem bestimmt ist, umfassend mehrere Quellen ($\{S_1$, $S_2, ..., S_M\}$), das Relais und einen Empfänger, umfassend:

- ein Mittel (DDU) zur Decodierung um durch die Quelle zu schätzen, aus empfangenen Blöcken, welche aufeinanderfolgenden Codewörtern $x_{S,t}$ entsprechen, die gleichzeitig durch die Quellen während $T$ Transmissionsintervallen ausgegeben werden, so dass in jedem Zeitintervall $t$, $t=1, ..., T$ ein Codewort $x_{S,t}$ B Blöcke $x_{S,t}^{(1)}$, $x_{S,t}^{(2)}$, ..., $x_{S,t}^{(B)}$ umfasst, deren erster Block unabhängig von den anderen Blöcken decodiert werden kann, wobei ein Codewort $x_{S,t}$ eine Nachricht $u_{S,t}$ von K Bits codiert, wobei K, B und T natürliche Zahlen sind, $B > 2$, $T > 1$,
- ein Mittel (DU) zur Detektion von ohne Fehler decodierten Nachrichten und zur Entscheidung durch das Relais,
- ein Mittel (ETU) zur Codierung und zur Transmission eines Signals, das nur für ohne Fehler decodierte Nachrichten repräsentativ ist, zu dem Empfänger,

**dadurch gekennzeichnet, dass** das Mittel (ETU) zur Codierung und zur Transmission unter der Steuerung des Mittels (DU) zur Fehlerdetektion und zur Entscheidung gemäß einem Auswahlschema nach jedem empfangenen Block steht, und dadurch, dass das Auswahlschema derart ist, dass ein repräsentatives Signal, das sich auf eine während eines Transmissionsintervalls ohne Fehler decodierte Nachricht bezieht, durch das Relais während desselben Transmissionsintervalls weitergeleitet wird.

## Claims

**1.** Relaying method (1) implemented by a full-duplex relay intended for a telecommunication system comprising several sources ($\{S_1, S_2,..., S_M\}$), the relay and a recipient, comprising:

- a step (2) of decoding so as to estimate per source, on the basis of blocks received corresponding to successive code words $x_{S,t}$ emitted simultaneously by the sources during T transmission intervals, such that at each transmission interval $t$, $t=1,...,T$, a code word $x_{S,t}$ comprises B blocks $x_{S,t}^{(1)}$ $x_{S,t}^{(2)}$, ..., $x_{S,t}^{(B)}$ the first of which can be decoded independently of the other blocks, a code word $x_{S,t}$ coding a message $u_{S,t}$ of K bits with K, B and T natural numbers, $B > 2$, $T > 1$,
- a step (3) of detecting the messages decoded without errors and of deciding by the relay,
- a step (4) of coding and transmitting to the recipient a signal representative solely of the messages decoded without error,

**characterized in that** the coding and the transmission are under control of the step of detecting the messages decoded without error and of deciding in accordance with a selection scheme, after each block received, and **in that** the selection scheme is such that a representative signal pertaining to a message decoded without error during a transmission interval is transmitted by the relay during the same transmission interval.

2. Method (1) according to Claim 1, furthermore comprising a storing of the messages decoded without error.

3. Method (1) according to Claim 1, in which in the absence of any message decoded without error during a current transmission interval t, the step of error detection and decision authorizes the coding and the transmission of a message decoded without error during a previous transmission interval.

4. Method (1) according to Claim 1, in which the decision authorizes the coding and the transmission of a message as soon as it is decoded without error.

5. Method (1) according to Claim 1, in which the detection and the decoding are under control of the step of detecting the messages decoded without errors and of deciding in accordance with a selection scheme, after each block received.

6. Method (1) according to the preceding claim, in which if all the messages are decoded without error during a current transmission interval t, the step of detecting the messages decoded without errors and of deciding halts the detection and the decoding until the end of the current transmission interval and authorizes the coding and the transmission.

7. Method (1) according to Claim 1, in which the selection scheme is such that at each current transmission interval t, the signal transmitted is representative of the messages decoded without error until the current transmission interval t.

8. Method (1) according to Claim 1, in which the selection scheme is such that during each current transmission interval t, the signal transmitted is representative of the messages which have been decoded without error only during the current transmission interval t.

9. Method (1) according to Claim 1, in which the coding and transmission step comprises an interleaving per source for which a message is decoded without error before a network coding.

10. Method (1) according to Claim 1, in which the coding and transmission step comprises a network coding followed by a first interleaving, by a channel coding and by a second interleaving distinct from the first.

11. Full-Duplex relay (R) intended for a telecommunication system comprising several sources ($\{S_1, S_2, ..., S_M\}$), the relay and a recipient, comprising:

- a means (DDU) for decoding so as to estimate per source, on the basis of blocks received corresponding to successive code words $x_{S,t}$ emitted simultaneously by the sources during $T$ transmission intervals, such that at each time interval $t$, $t = 1,..., T$, a code word $x_{S,t}$ comprises B blocks the first block of which can be decoded independently of the other blocks, a code word $x_{S,t}$ coding a message $u_{S,t}$ of K bits, with K, B and T natural numbers, $B > 2$, $T > 1$,
- a means (DU) for detecting the messages decoded without errors and for deciding by the relay,
- a means (ETU) for coding and for transmitting to the recipient a signal representative solely of the messages decoded without error,

**characterized in that** the coding and transmission means (ETU) is under control of the means (DU) for error detection and for deciding in accordance with a selection scheme, after each block received, and **in that** the selection scheme is such that a representative signal pertaining to a message decoded without error during a transmission interval is transmitted by the relay during the same transmission interval.

Fig.1

Fig.3

Fig.2

Fig.4

EP 3 161 985 B1

Fig.5

Fig.7

# Fig.8

# Fig.13

Fig.9

Fig.6

t= 1

$S_1, S_2$

| 1 | 2 | 3 | 4 | 5 | | ... | | B |

$S_1(1)$      $S_2(1)$

Fig.10

$R_1$

R1 will help
only S1

R1 will help
S1+S2

☐ S1+S2 is sent    ▨ S2 is sent

▧ S1 is sent

1     2        T    T+1

$S_1, S_2$

$S_1(1) \, S_2(1)$    $S_2(2)$     ...    $S_1(T) \, S_2(T)$

$R_1$

...    ...

Fig.11

Fig.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011033237 A
- WO 2012022905 A

**Littérature non-brevet citée dans la description**

- **ATOOSA HATEFI et al.** International Symposium on Network Coding. IEEE, 25 Juillet 2011
- **F.R. KSCHISCHANG ; B.J. FREY ; H.-A. LOE-LIGER.** Factor graphs and the sum-product algorithm. *IEEE Trans. Inform. Theory,* Février 2001, vol. IT-47 (2), 498-519